# EUROPEAN PATENT SPECIFICATION

(11) **EP 2 635 531 B1**
(45) Date of publication and mention of the grant of the patent: **20.12.2017**
(21) Application number: 11776780.6
(22) Date of filing: 28.10.2011
(51) Int. Cl.: C02F 1/04, C02F 1/08, C02F 1/42, C02F 1/56, C02F 1/72, C02F 103/38

(54) **PROCESS FOR TREATING AND RECYCLING AQUEOUS EFFLUENTS ORIGINATING FROM THE PREPARATION OF A VINYL CHLORIDE POLYMER**
VERFAHREN ZUR BEHANDLUNG UND RÜCKGEWINNUNG VON ABWÄSSERN AUS DER HERSTELLUNG VON EINES VINYLCHLORIDPOLYMERS
PROCÉDÉ DE TRAITEMENT ET DE RECYCLAGE D'EFFLUENTS AQUEUX PROVENANT DE LA PRÉPARATION D'UN POLYMÈRE DE CHLORURE DE VINYLE

(30) Priority: 04.11.2010 FR 1059073
(43) Date of publication of application: 11.09.2013
(73) Proprietor: Solvay SA, 1050 Brussels (BE)
(72) Inventor: VAN WEYNBERGH, Jacques, B-1082 Brussels (BE)
(74) Representative: Vande Gucht, Anne
(86) International application number: PCT/EP2011/069004
(87) International publication number: WO 2012/059429

(56) References cited:
- CN-A- 101 343 132
- CN-A- 101 525 198
- US-A1- 2007 151 840
- US-A1- 2008 146 753
- US-B2- 7 351 342

## Description

The present invention relates to a process for treating and recycling aqueous effluents originating from the preparation of a vinyl chloride polymer. It also relates to a process for preparing a vinyl chloride polymer comprising the subsequent treatment and recycling of the aqueous effluents originating from this preparation.

It is known how to synthesize vinyl chloride polymers in an aqueous medium.

Thus, for example, the polymerization of vinyl chloride may be carried out in batch mode according to a process said to be "in suspension", in an autoclave containing, in particular:
- water;
- the vinyl chloride monomer (VC);
- an initiator that is soluble in the monomer (usually an organic peroxide);
- a protective colloid (polyvinyl alcohols ; cellulose derivatives, etc.).

The aqueous suspension of particles of poly(vinyl chloride) (PVC) obtained, commonly referred to as a "slurry", is degassed then customarily subjected to a treatment with a countercurrent flow of steam in a "stripping" column in order to remove most of the residual VC. This suspension is then transported to large tanks equipped with a stirring system, then transferred to centrifugal dryers or filters that make it possible to remove a substantial amount of the mother liquors and to obtain a polymer "cake" that generally still contains around 20 % by weight of water. This cake is dried, usually in fluid-bed dryers.

The use of water as a medium for synthesizing vinyl chloride polymers is not without drawbacks. Firstly, the amount of water needed for this synthesis is generally very large. Thus, in the case, mentioned above, of the polymerization of VC according to the suspension process, 2300 to 3000 litres of water are generally needed for the production of one tonne of PVC. Next, in order for the polymer obtained to be of impeccable quality, this water must be perfectly pure. Finally, the mother liquors generated by the filtration or centrifugation of the aqueous suspension of polymer particles contain multiple impurities, in particular including :
- the polymer itself, in the form of very fine particles that were not able to be separated from the aqueous suspension ;
- the inhibitor added at the end of the polymerization, which may be a base such as aqueous ammonia ;
- the residues of the protective colloid;
- the residues of the initiator;
- dissolved salts;
etc.

The presence of these impurities makes a biological treatment (BT) and/or a physicochemical treatment (PCT) for purifying the mother liquors obligatory before they are discharged into the environment.

The discharging of the purified mother liquors nevertheless remains practically inevitable since, irrespective of the severity and effectiveness of the BT and/or PCT, these mother liquors cannot be reused, for example as an aqueous medium for the synthesis of vinyl chloride polymers, especially because they are not, in spite of everything, pure enough and because the polymer microparticles that they contain, by functioning as polymerization nuclei in the aqueous medium, would be detrimental to the quality of a polymer that might subsequently be synthesized therein.

It has however been proposed, within the context of the production of PVC in aqueous suspension (see document WO 96/18659), to recycle to the reactor, during the polymerization phase (for example after 5 to 20 % of the total polymerization time), at least one portion of the water separated from the aqueous suspension of PVC obtained and also the reliquefied unreacted monomer. This technique, which would make it possible to not affect the desired final properties of the PVC manufactured, involves, in order to operate correctly, the combined use of at least two reactors, and preferably of a third reactor interconnected with the first two. The precise control of the correct combined operation of these three reactors in order to obtain a polymer having the desired properties is not easy.

It has also been proposed recently (see document US 2008/0146753-A1) to reduce the amount of fully demineralized fresh water needed for the polymerization of VC in aqueous suspension and to reduce the amount of wastewater to be discharged into the environment by purifying the reaction mixture, from which the polymer is separated off, by (micro)filtration and by recycling it to the polymerization.

The purification of the reaction mixture by (micro)filtration is not a treatment that is free from drawbacks : the volume of mother liquors to be purified is very large and the amount of energy to be used in order to filter them is considerable and is even more so since preheating the mother liquors improves the efficiency of their filtration ; the technique involves the regeneration of the filtration membranes used, usually by cleaning them with acid or basic liquids which are themselves not without a harmful effect on the environment; these membranes must also be replaced relatively frequently.

The present invention aims to solve these problems by providing a process that makes it possible to treat and recycle aqueous effluents originating from the preparation of vinyl chloride polymers, thus considerably reducing the consumption of fresh water needed for their preparation, without excessive expenditure on power.

For this purpose, a main subject of the invention is a process for treating and recycling aqueous effluents originating from the preparation of a vinyl chloride polymer, which includes a step of polymerizing at least one monomer including vinyl chloride carried out in an aqueous medium, from which the unreacted monomer and the polymer obtained have then been separated, said process comprising :
- a step of vaporizing at least one portion of said aqueous effluents in order to obtain purified vaporized aqueous effluents ;
- a step of condensing the purified vaporized aqueous effluents in order to obtain purified condensed aqueous effluents ; and
- a step of recycling the purified condensed aqueous effluents.

The expression "vinyl chloride polymer" (also referred to more simply as "polymer" in the present description) is understood to mean both homopolymers of vinyl chloride (vinyl chloride is then the only monomer) and its copolymers (one or more other monomers is (are) then polymerized with the vinyl chloride) with other ethylenically unsaturated monomers, whether these are halogenated (chloroolefins, for example vinylidene chloride ; chloroacrylates ; chlorinated vinyl ethers such as for example perchlorinated vinyl ethers bearing perchloroalkyl groups containing from 1 to 6 carbon atoms) or non-halogenated (olefins such as for example ethylene, propylene ; styrene derivatives and styrene ; vinyl ethers ; vinyl esters such as for example vinyl acetate ; acrylic acids, esters, nitriles and amides ; methacrylic acids, esters, nitriles and amides). Vinyl chloride homopolymers and copolymers of vinyl chloride with a halogenated or non-halogenated comonomer advantageously containing at least 50 %, preferably at least 60 %, particularly preferably at least 70 % and very particularly preferably at least 85 % by weight of monomeric units derived from vinyl chloride are particularly preferred. Vinyl chloride homopolymers and copolymers of vinyl chloride with vinyl acetate are very particularly preferred. Vinyl chloride homopolymers are truly very particularly preferred.

In the present description, the terms "monomer" and "polymer"are used in the singular and in the plural indiscriminately.

The polymerization step included in the preparation of the vinyl chloride polymer, from which the aqueous effluents treated and recycled according to the process of the invention originate, is carried out in an aqueous medium.

In the present description, the term "medium" is understood to mean the contents of the polymerization reactor with the exception of the monomer introduced and the polymer formed.

The expression "a step of polymerizing ... carried out in an aqueous medium" is understood to mean, in the present description, any polymerization carried out in aqueous dispersion, i.e. either a polymerization carried out in aqueous suspension or a polymerization carried out in aqueous emulsion or else a polymerization carried out in aqueous microsuspension. These polymerizations in aqueous dispersion are advantageously performed in accordance with a radical mechanism.

The expression "polymerization in aqueous suspension" is understood to mean any polymerization process performed with stirring in an aqueous medium in the presence of dispersants and oil-soluble radical initiators.

The expression "polymerization in aqueous emulsion" is understood to mean any polymerization process performed with stirring in an aqueous medium in the presence of emulsifiers and water-soluble radical initiators.

The expression "polymerization in aqueous microsuspension", also referred to as polymerization in (partially or completely) homogenized aqueous dispersion, is understood to mean any polymerization process performed with stirring in an aqueous medium in the presence of emulsifiers and oil-soluble radical initiators and in which an emulsion of droplets of monomers is produced by virtue of powerful mechanical stirring.

The polymerization step included in the preparation of the vinyl chloride polymer, from which the aqueous effluents treated according to the process of the invention originate, is preferably carried out in aqueous suspension. The vinyl chloride polymer is then, in this case, advantageously a solid polymer.

The step of polymerization, preferably in aqueous suspension, is preferably carried out within a reactor, preferably a stirred reactor.

It is the latter polymerization step carried out in aqueous suspension which will be described in greater detail hereinbelow for the purposes of illustrating the invention, without however limiting the scope of the latter.

This step of polymerization in aqueous suspension is advantageously carried out with the intervention of oil-soluble radical initiators, such as peroxides, for example dilauryl peroxide, di-*t*-butyl peroxide and dibenzoyl peroxide ; hydroperoxides, for example *t*-butyl hydroperoxide ; peresters, for example *t*-butyl perpivalate, *t*-butyl 2-ethyl hexanoate and *t*-butyl perneodecanoate ; percarbonates, for example diethyl peroxydicarbonate and diisopropyl peroxydicarbonate and diethylhexyl peroxydicarbonate ; and such as azo compounds, for example azobisisobutyronitrile and 2,2'-azobis(methoxy-2,4-dimethylvaleronitrile. The amount of oil-soluble radical initiator used advantageously varies between 0.2 and 2.0 ‰ by weight relative to the weight of monomer(s) used.

This step of polymerization in aqueous suspension is advantageously carried out in the presence of dispersants or protective colloids, such as for example water-soluble cellulose ethers, partially saponified polyvinyl alcohol and mixtures thereof. It is also possible to use surfactants at the same time as the dispersants. The amount of dispersant used advantageously varies between 0.7 and 2.0 ‰ by weight relative to the weight of monomer(s) used.

This step of polymerization in aqueous suspension may optionally be carried out in the presence of additives other than the abovementioned additives (dispersants, surfactants) for improving the implementation of the process and/or the characteristics of the resulting polymer. Examples of other conventional additives are chain transfer agents, anti-scaling agents, antistatic agents, antifoaming agents, cosolvents and pH regulators, such as buffer salts, for example sodium phosphate, polyphosphate and hydrogen carbonate.

The temperature of the polymerization, preferably in aqueous suspension, is advantageously between 30 and 100°C, preferably between 30 and 90°C, more particularly between 45 and 85°C. The polymerization, preferably in aqueous suspension, is advantageously carried out under a pressure of between 0.3 and 2.5 MPa, preferably between 0.5 and 1.9 MPa.

The step of polymerization, preferably in aqueous suspension, is advantageously continued until 60 to 98 % by weight, preferably 80 to 95 % by weight of the monomer(s) is (are) converted with a concomitant pressure drop within the reactor. In the preferred case of polymerization in suspension, a polymerization inhibitor, for example a base such as aqueous ammonia or a phenol, is then added in an amount advantageously between 0.01 and 0.5 ‰ by weight relative to the weight of monomer(s) used.

The content of solid polymer of the aqueous suspension obtained at the end of the step of polymerizing in aqueous suspension is advantageously between 20 and 45 % by weight, preferably between 25 and 40 % by weight.

The expression "from which the unreacted monomer ... have then been separated" is understood to mean, for the purposes of the present invention, that the monomer that has not reacted which remains at the end of the polymerization step, preferably in the aqueous suspension obtained ("slurry") when the polymerization step is carried out in aqueous suspension, as a consequence of the incomplete conversion of the monomer, is separated.

The step of separating the unreacted monomer may be carried out by any known means. In the preferred case of the polymerization in aqueous suspension, this removal may be performed conventionally by degassing the suspension, usually carried out in a depressurization tank, followed by a distillation operation or, preferably, steam "stripping" of the residual monomer.

The removal of the residual monomer may advantageously be carried out by supplying a stripping column equipped with perforated plates, via its upper portion, with the previously depressurized aqueous suspension. (By way of example, the VC content of the aqueous suspension at the stripping column inlet is usually between 3000 and 30 000 ppm (0.3 to 3 %). The base of the stripping column is supplied with steam and the aqueous suspension is "stripped" countercurrently via the perforated plates of the column. Among the columns that can be used for the stripping, mention may be made, for example, of the column described in the French patent application published under the number 2 940 137, the content of which is incorporated by reference into the present application.

The monomer removed from the aqueous suspension in the stripping column is advantageously, for ecological and economic reasons, recycled to the polymerization step. (By way of example, the amount of VC recycled may represent between around 1 % and around 3 % of the total weight of VC used in the polymerization step and the amount of this monomer still present in the aqueous suspension leaving the stripping column is advantageously less than 30 ppm, preferably less than 10 ppm).

The expression "from which the polymer obtained ... have then been separated" is understood to mean, for the purposes of the present invention, that the polymer obtained at the end of the polymerization step, preferably in the aqueous suspension obtained ("slurry") when the polymerization step is carried out in aqueous suspension, is separated, preferably after separation of the unreacted monomer.

The step of separating the polymer obtained may be carried out by any known means. In the preferred case of polymerization in aqueous suspension, the aqueous suspension drawn off from the device for separating the residual monomer is then advantageously subjected to a liquid-solid separation treatment that aims to reduce the water content thereof. This treatment usually comprises a settling operation, a centrifugal dewatering operation or, preferably, a succession of the two operations. Following this treatment, the water content of the resulting solid polymer is advantageously no more than between 10 and 35 %, preferably between 15 and 30 % by weight. The solids content of the liquid phase (also referred to as "mother liquors") separated from the solid polymer is, itself, advantageously between 10 and 2500 mg/l.

Advantageously, the solid polymer ("cake") resulting from the aforementioned liquid-solid separation treatment is subjected to a final drying carried out in any drying device known for this purpose, such as rotary drum dryers and fluid-bed dryers.

The main objective of the present invention lies in a process for treating and recycling aqueous effluents originating from the preparation of a vinyl chloride polymer, preferably in aqueous suspension, described above.

The expression "aqueous effluents" (also referred to as "contaminated aqueous effluents" in the present description) is understood in the present description to mean any material containing more than 50 % by weight, more particularly more than 70 % by weight of water in the liquid, vapour or solid state, preferably in the liquid state, in which water constituents known as "contaminants" in the present description are present, in suspended, dispersed or dissolved form.

The term "contaminants" is understood in the present description to mean all the constituents, other than water, present in the aqueous effluents, in the preferred case of polymerization in aqueous suspension the aqueous effluents (E1) to (E5) listed below, in the form of chemical compounds suspended or dispersed in the water and/or in the form of ions or chemical compounds dissolved in the water.

In the preferred case of polymerization in aqueous suspension, the aqueous effluents, at least one portion of which is treated according to the process of the present invention, may originate from various sources. They may be, as nonlimiting examples, separately or in combination :
- water (E1) resulting from the condensation of the steam supplying the stripping column, when it is this device that is used for removing the residual monomer not converted during the polymerization step ;
- mother liquors (E2) originating from the liquid-solid separation treatment (settling, centrifugal dewatering, etc.) of the aqueous suspension drawn off from the device for removing the residual monomer ; usually, when the polymerization inhibitor is a base, the pH of the mother liquors (E2) is basic, for example between 7.5 and 9.5 ; the temperature of the mother liquors (E2) is usually between 40 and 80°C, more particularly between 50 and 70°C ;
- water (E3) resulting from the final drying of the solid polymer ("cake") from the liquid-solid separation treatment;
- water (E4) used for rinsing and washing the various devices used for preparing the halogenated polymer : among these devices, mention may be made of:
   - the reactor within which the polymerization step is carried out;
   - the optional stripping column ;
   - the ducts and pipes connecting these devices;
- various purge waters (E5), such as the purge water from the optional cooling towers for chilling the cooling water of the reactor, the optional residual water and purge water originating from the manufacture of the radical initiator, etc.

In the preferred case of the polymerization in aqueous suspension, the contaminants present in the aqueous effluents may be, non-limitingly :
- (C1) the vinyl chloride polymer itself, in the form of very fine particles, the average diameter of which is usually between 10 and 100 µm, more particularly between 25 and 60 µm, and which have not been separated from the aqueous suspension during the liquid-solid separation treatment to which it has been subjected ;
- (C2) the inhibitor added at the end of the polymerization, which may be a base such as aqueous ammonia or phenol, for example ;
- (C3) the residues of the dispersant or protective colloid (for example: cellulose ether, partially saponified polyvinyl alcohol) not incorporated into the polymer particles, usually representing a COD (chemical oxygen demand) of 50 to 5000, most often from 100 to 3500 mg/l;
- (C4) dissolved inorganic and organic salts usually representing a conductivity from 70 to 10000 µS/cm at 25°C ;
- (C5) halogen ions originating from residues of the monomer and the unreacted residual monomer itself;
- (C6) other possible contaminants, such as organic compounds that are dissolved, dispersed or in suspension, decomposition residues of the initiator and of additives added to the polymerization step, etc.

According to the invention, the process for treating and recycling aqueous effluents preferably takes place at the earliest when the unreacted monomer and the polymer obtained have been separated from the aqueous medium in which the step of polymerization, preferably in aqueous suspension, was carried out. In the preferred case of polymerization in aqueous suspension, it is therefore advantageously applied at least to the treatment of the effluents (E2), preferably at least to the treatment of the effluents (E1) and (E2), particularly preferably at least to the treatment of the effluents (E1), (E2) and (E4) and, more particularly, to the treatment of all of the effluents (E1) to (E5).

According to the invention, the process for treating and recycling aqueous effluents comprises
- a step of vaporizing at least one portion of said aqueous effluents in order to obtain purified vaporized aqueous effluents ;
- a step of condensing the purified vaporized aqueous effluents in order to obtain purified condensed aqueous effluents.

The term "vaporization" will be interpreted in its conventional sense as defining the phase transition from the liquid state to the gaseous (vapour) state.

The term "condensation" will be interpreted in its conventional sense as defining the phase transition from the gaseous (vapour) state to the liquid state.

The vaporization of at least one portion of the aqueous effluents in order to obtain purified vaporized aqueous effluents and the condensation of the purified vaporized aqueous effluents in order to obtain purified condensed aqueous effluents may be carried out in any device known for this purpose. The vaporization step and the condensation step are advantageously carried out in a device chosen from evaporators. Evaporators that can be used are plate evaporators, agitated evaporators, spiral tube evaporators, recirculation-type evaporators, fluidized bed evaporators, climbing film evaporators and falling film evaporators, in particular single-effect and multiple-effect falling film evaporators.

The vaporization step and the condensation step are preferably carried out in a falling film evaporator, in particular because this type of evaporator is well suited to the vaporization of liquids that are moderately loaded with solids, such as the aqueous effluents to be treated according to the invention. This type of evaporator also advantageously makes it possible to operate in a low "delta T" zone, advantageously of less than 15°C, preferably of less than 10°C and more particularly between 5 and 8°C. The expression "delta T" is understood to mean the difference in temperature between the aqueous effluents that are vaporized in the appropriate parts of the evaporator and the purified condensed aqueous effluents after condensation.

The efficiency of the evaporator is advantageously optimal when the aqueous effluents enter therein at their boiling point and are suitably distributed between the externally-heated constituent tubes of the evaporator, the internal walls of which are uniformly wetted. This is why the head of the evaporator is advantageously provided with a device for distributing the liquid between the various tubes.

The pressure at which the vaporization step and the condensation step of the process according to the invention are carried out is advantageously chosen as a function of the temperature at which it is desired to vaporize and then condense the aqueous effluents. The vaporization and condensation steps may be carried out for example at a pressure advantageously between 0 and 0.1 MPa. It is preferable to work at atmospheric pressure, in particular for limiting the volumes of purified vaporized aqueous effluents to be generated for the economy of the process, for limiting any foaming and/or scaling phenomenon and for preventing ingress of inert gases.

The vaporization of the aqueous effluents according to the invention advantageously makes it possible to purify them by concentrating the non-volatile contaminants. The attainable concentration factor of the contaminants depends in particular on their initial concentration in the aqueous effluents and on their physicochemical nature, the limiting factor often being the viscosity of the concentrated non-volatile contaminants (also known as "concentrates") and also the foaming and/or scaling tendency of the evaporator.

The step of condensing the purified vaporized aqueous effluents according to the invention makes it possible to obtain purified condensed aqueous effluents (or "condensates"), in particular that are purified of contaminants via their prior vaporization.

Advantageously, the energy of the process is optimized by using one or other of the methods hereinbelow, taken separately or in combination :
- multi-effect evaporation, in particular by carrying out the vaporization followed by the condensation of the aqueous effluents in several successive evaporators arranged in series that are known as "effects". The purified vaporized aqueous effluents resulting from the first effect advantageously condense at the second effect and the energy liberated by the condensation is used to vaporize the contaminated aqueous effluents that are found therein. The third evaporator advantageously acts as a condenser for the purified vaporized aqueous effluents resulting from the second effect and so on. The purified vaporized aqueous effluents of the last effect are advantageously used to heat up the aqueous effluents of the first effect. In the absence of heat losses, it is therefore advantageously possible to reuse the latent heat of vaporization a large number of times : the more effects there are, the lower the energy cost will be. It may thus be preferable to use several falling film evaporators arranged in series ; the external vapour consumption needed for their operation is then greatly reduced, without providing mechanical energy.
- Thermal recompression of the purified vaporized aqueous effluents, using for example an ejector;
- Mechanical recompression of the purified vaporized aqueous effluents ; this technique, often called "evapo-concentration with mechanical vapour recompression (MVR)" when coupled to a vaporization, advantageously makes it possible to substantially reduce the consumption of vapour at the expense of a limited provision of electrical energy and is more compact than multi-effect evaporation. It advantageously requires a rotating recompression machine which may be for example a compressor. Compressors that can be used are "reciprocating" compressors, rotary compressors, screw compressors, axial compressors, centrifugal compressors, single-effect and multiple-effect compressors and fans. These compressors may be used for recompressing the purified vaporized aqueous effluents resulting from any evaporator mentioned above. Advantageously, the compression ratios to be achieved correspond to delta T values of greater than 4°C, preferably of greater than 6°C.

The vaporization step and the condensation step are preferably carried out in an evaporator, preferably a falling film evaporator, with mechanical recompression of the purified vaporized aqueous effluents. Within this context, it has proved particularly advantageous to couple a fan, as compressor, with a falling film evaporator.

The purified vaporized aqueous effluents, optionally recompressed as indicated above, may advantageously provide the heat needed for the vaporization of the contaminated aqueous effluents by recondensing via heat exchange in the appropriate parts of the evaporator. The resulting purified condensates may then advantageously be used to preheat said aqueous effluents before the vaporization thereof, in particular if these aqueous effluents are not available at their boiling point in the evaporator. The purified condensates are advantageously produced at a few degrees above the inlet temperature of the contaminated aqueous effluents.

In the case of polymerization in aqueous suspension, the process for treating and recycling aqueous effluents according to the invention may prove particularly advantageous from an energy saving viewpoint when the purified condensates result from the vaporization followed by the condensation of the mother liquors (E2) which are advantageously already at a temperature between 40 and 80°C (see above) before the vaporization thereof.

The concentrates resulting from the vaporization of the aqueous effluents according to the invention are advantageously extracted, preferably from the bottom of the evaporator, and are advantageously sent to a suitable PCT and/or BT, preferably after cooling, in order to release only wastewater of environmentally acceptable quality.

The BTs of the water advantageously require systems that give rise to the development of bacteria, which retain the organic pollution and feed thereon. They may comprise an aeration tank (for example, a tank for sequential aeration: aeration and settling carried out in the same tank) followed by a clarifier, rotating biological contactors, biofilters, etc. The PCTs require physical means and the addition of chemical reagents. Thus, they advantageously include an agitation (causing advantageously an aeration) of the wastewater and also a settling operation (also known as clarification), advantageously eliminating a large proportion of contaminants, combined, in order to advantageously render it better performing, with the use of coagulants (for example iron salts or aluminium salts) and flocculants (for example activated silica, polyelectrolytes) which advantageously cause the particles in suspension to agglomerate and accelerate the falling thereof in the form of clusters of solids known as "flocs".

The process according to the invention advantageously makes it possible to obtain purified condensates, the contaminant content of which is significantly lower than that of the aqueous effluents treated. Thus, in particular and depending on the type of evaporator and recompression machine chosen, in the particular case of polymerization in aqueous suspension, the content of inhibitor (C2) of the purified condensates may advantageously be at least 2 times, preferably at least 3 times lower than that of the aqueous effluents before treatment; the COD (C3) of the purified condensates may advantageously be at least half, preferably at least two and a half times lower than that of the aqueous effluents before treatment; the conductivity (C4) of the purified condensates may advantageously be at least 5 times, preferably at least 7 times lower than that of the aqueous effluents before treatment; the content of halogen ions (C5) of the purified condensates may advantageously be at least 100 times, preferably at least 130 times lower than that of the aqueous effluents before treatment.

The process according to the invention moreover advantageously makes it possible to obtain concentrates having a contaminant content greater than that of the aqueous effluents treated. The operation of the PCT and/or BT to which these concentrates may then advantageously be subjected is thus easier and requires less expenditure on power. The respective measurements of the dry residue of the aqueous effluents and of the concentrates show that the contaminant content of the latter may advantageously be at least 5 times, preferably at least 10 times, particularly at least 70 times, more particularly at least 100 times and even up to 200 times or 300 times greater than that of the aqueous effluents. The upper limit of the contaminant content of the concentrates customarily depends only on the equipment capability (pumping limit) for transporting them to the PCT and/or the BT.

According to the invention, the process for treating and recycling aqueous effluents comprises :
- a step of recycling the purified condensed aqueous effluents.
The purified condensates obtained by the process according to the invention are, separately or in possible combination, recycled to one of the steps for preparing the vinyl chloride polymer and/or into any other industrial plant similar to the unit for preparing the vinyl chloride polymer. According to the invention, the purified condensates are recycled as make-up water to the step ot polymerization, carried out in an aqueous medium, of the vinyl chloride (if the content of inhibitor (C2) - and the basic nature that the latter may impart to the condensates - turns out to impede the smooth progress of the polymerization step, it is advantageously possible to acidify the mother liquors (E2) to a pH below 7, preferably below 5.5, in order to keep the inhibitor in the concentrates). The process of the invention makes it possible to significantly reduce the amount of fresh pure water needed for preparing the vinyl chloride polymer and for the various devices that this preparation requires. Advantageously, the saving made in fresh pure water may reach 20 %, preferably 30 %, particularly preferably 60 %, or even 80 %.

A person skilled in the art will readily understand that it is possible to introduce embodiment variants to the process according to the invention, which do not depart from the context of the latter and are not outside the scope thereof.

Thus, according to a first embodiment variant (variant 1), it is possible to treat and recycle one portion of the aqueous effluents originating from the preparation of the vinyl chloride polymer by the process that is the main subject of the invention described above and another portion of these effluents by a purification step comprising a filtration. Depending on the diameter of the pores of the filtering element advantageously used for this filtration, it may be a microfiltration or an ultrafiltration, which are well known in the technical field of filtration. The microfiltration and the ultrafiltration are advantageously carried out especially for eliminating very fine solid particles present in the aqueous effluents. The filtering element may be a tube, a plate or a membrane. The filtering element is preferably a membrane. The material of the filtering element may be a ceramic filter, a sintered metal, metallic fibres or polymeric membranes. Reference is advantageously made to microfiltration when the diameter of the pores of the filtering element is greater than 0.1 µm and when its structure is relatively symmetrical with open pores. Reference is advantageously made to ultrafiltration when the diameter of the pores of the filtering element is less than 0.1 µm and when its structure is asymmetric with open pores. In both cases, it may be filtration known as "cross-flow (CF) filtration" considering the tangential introduction of the effluent to be filtered. Advantageously, it may also be filtration known as "cross-rotation (CR) filtration" which involves the presence of a rotary mechanical element preventing the formation of deposits on the filtering element or the combination of the two. Preferably, the filtration, preferably microfiltration or ultrafiltration, is a filtration known as "cross-flow" and "cross-rotation" filtration. A "cross-flow" and "cross-rotation" ultrafiltration is very particularly preferred.

According to variant 1, it is also possible to carry out, in addition to the purification step comprising a filtration, and downstream of the latter, a step of purification via ion exchange (IE) or via reverse osmosis (RO).

IE is advantageously a reversible chemical reaction in which an ion in solution is exchanged with an ion of similar charge bonded to a solid particle, often of an inorganic zeolite or of a synthetic organic resin. An IE purification step is advantageously carried out in order to demineralize the aqueous effluents. In practice, cations (Ca⁺⁺, Na⁺, etc., cation exchange resin) are advantageously exchanged with protons, and anions (carbonate, sulphate, chromate, chloride, etc.) are advantageously exchanged with a hydroxyl group. It is common, depending on the conductivity of the aqueous effluents, to advantageously combine cation exchange resins that are respectively weakly or strongly acidic, with anion exchange resins that are respectively strongly or weakly basic.

RO is advantageously a physical process for concentrating ions dissolved in the aqueous effluents based on the principle of reversing the osmosis process, obtained by exerting, in one of the compartments separated by a membrane, a hydrostatic pressure which exceeds the osmotic pressure. Thus, water is advantageously forced to leave the pressurized compartment in spite of the increase in the concentration of dissolved ions which occurs therein, and the dilution which takes place in the other compartment by increasing the pressure.

The aqueous effluents resulting from the filtration and optionally from the IE or RO are advantageously recycled in the same way as the purified condensed aqueous effluents.

The implementation of this variant 1 may prove advantageous when the vinyl chloride polymer is prepared sometimes in a reactor supplied with hot water and sometimes in a reactor supplied with cold water. When the reactor is supplied with hot water, the aqueous effluents originating from the preparation of the vinyl chloride polymer may be recycled to the latter after having been treated by the process comprising the vaporisation step followed by the condensation step according to the invention. When the reactor is supplied with cold water, the aqueous effluents originating from the preparation of the halogenated polymer may be recycled to the latter after having been treated by the purification step comprising a filtration.

According to a second embodiment variant (variant 2), the process for treating and recycling aqueous effluents according to the main subject of the invention may take place only after a PCT and/or a BT, in order to improve the quality of the effluents which result therefrom and give them a purity such that they can be recycled, for example as make-up water, to the polymerization step for preparing the vinyl chloride polymer.

According to a third embodiment variant (variant 3), it is possible to add to the process for treating and recycling aqueous effluents according to the main subject of the invention applied, according to variant 2, to effluents resulting from the PCT and/or BT (thus dividing the effluents resulting from the PCT and/or BT into two portions), before recycling the aqueous effluents, a different purification step via IE or RO, optionally itself preceded by at least one purification step comprising a multimedia filter (MMF) or an activated carbon filter (AC). This purification step comprising an MMF or an AC may itself also be preceded by a purification step comprising a membrane bioreactor (MBR).

The MMF is advantageously an improved version of the sand filter and may contain up to three, and even four, layers of filter media. For example, an MMF may comprise an upper layer of low-density, coarse particles of coal (anthracite), an intermediate layer of smaller particles of calcined aluminium silicate or of sand and a lower layer of heavy garnet.

The AC is advantageously based on the capacity of activated carbon to adsorb organic molecules. The AC is advantageously used especially for eliminating the halogen and the vinyl chloride residues in the aqueous effluents.

The MBR is advantageously the combination of a bioreactor and a membrane filtration process. The membranes may be placed after the bioreactor or submerged in the latter. They may be mineral or organic and of the type used in microfiltration or in ultrafiltration.

The bioreactor is advantageously the site of the biodegradation of the aqueous effluents. It is a biological reactor in which a suitable biomass of microorganisms (bacteria) advantageously grows. These microorganisms will advantageously degrade the contaminants (more particularly the COD) present in the aqueous effluents owing to the introduction of oxygen via the aeration system. The second important step of the MBR is advantageously the separation, owing to the membranes, of the purified water from the digestion sludge that uses microorganisms for the digestion.

A fourth embodiment variant (variant 4) may consist in subjecting both, on the one hand, directly, the aqueous effluents originating from the preparation of the vinyl chloride polymer and, on the other hand, indirectly, after having subjected them to a PCT and/or a BT, to the treating and recycling process according to the main subject of the invention, in order to obtain advantages similar to those permitted by variant 2.

A fifth embodiment variant (variant 5) may consist in the combination of variants 1 and 3.

A sixth embodiment variant (variant 6) may consist in subjecting all the aqueous effluents originating from the preparation of a vinyl chloride polymer to the treatment and recycling process according to the main subject of the invention.

The aqueous effluent treatment process according to the invention, with all its definitions, notes, limitations, variants, characteristics and preferences defined above, may also be applied advantageously to all aqueous effluents, other than those originating from the preparation of a vinyl chloride polymer, which are available in the surrounding area of the plant for preparing this vinyl chloride polymer. Thus, in particular, it may be applied to the municipal wastewater released by the surrounding municipalities with a view to purifying it in order to use it in the process for preparing the vinyl chloride polymer.

According to another aspect, the invention also relates to a process for preparing a vinyl chloride polymer, comprising a step of polymerizing at least one monomer including vinyl chloride, carried out in an aqueous medium, from which the unreacted monomer and the polymer obtained have then been separated, and comprising the subsequent treatment and recycling of the aqueous effluents originating from this preparation as defined in Claim 1 and the claims that are dependent thereon.

According to yet another aspect, the invention also relates to a process for preparing a vinyl chloride polymer, comprising a step of polymerizing at least one monomer including vinyl chloride, carried out in an aqueous medium, from which the unreacted monomer and the polymer obtained have then been separated, and comprising the subsequent treatment and recycling of the aqueous effluents originating from this preparation, said treatment and recycling comprising :
- a step of vaporizing at least one portion of said aqueous effluents in order to obtain purified vaporized aqueous effluents ;
- a step of condensing the purified vaporized aqueous effluents in order to obtain purified condensed aqueous effluents ; and
- a step of recycling the purified condensed aqueous effluents to one of the steps for preparing the vinyl chloride polymer.

All the definitions, notes, limitations, characteristics and preferences defined above for the process for treating and recycling aqueous effluents originating from the preparation of a vinyl chloride polymer according to the invention advantageously apply also to the process for preparing a vinyl chloride polymer according to the invention.

Should the disclosure of any patents, patent applications, and publications conflict with the description of the present application to the extent that it may render a term unclear, the present description shall take precedence.

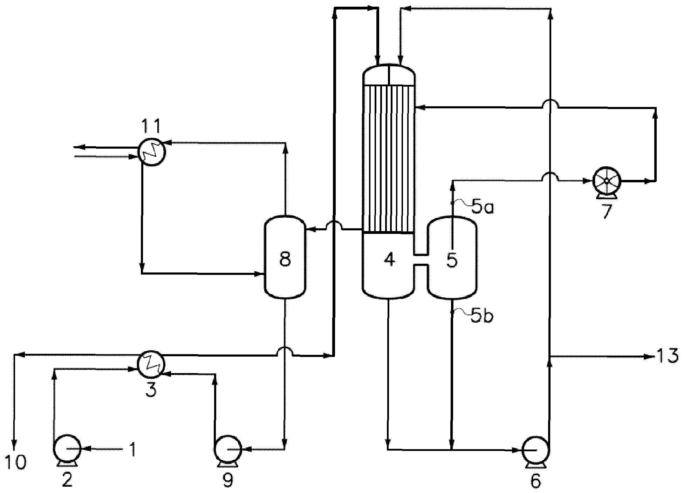

The process for treating and recycling aqueous effluents according to the invention will now be illustrated with reference to the drawing accompanying the present description. This drawing consists of the appended Figure 1, schematically representing one practical embodiment of the aspects of the invention.

The contaminated aqueous effluents 1 to be treated by the process according to the invention, originating from the preparation of a vinyl chloride polymer comprising a step of aqueous suspension polymerization of VC carried out in an aqueous medium, from which the unreacted VC and the polymer obtained have then been separated, are sent, via the pump 2 to the top of a falling film evaporator 4, after preheating them in the exchanger 3 via the purified condensed aqueous effluents originating from the evaporator 4, via the catch tank 8 and the pump 9. The contaminated aqueous effluents enter the evaporator 4 at their boiling point and are evenly distributed between the externally-heated tubes, the internal walls of the evaporator being uniformly wetted in order to ensure an optimal efficiency of the exchange (the optimization of the wetting of the tubes is obtained via suitable compartmentalization of the evaporator 4). The top of the evaporator 4 is provided with a device for distributing the liquid between the various tubes.

The fall rate of the film of liquid is gravitational speed at the top of the evaporator 4 and accelerates, via the thrust of the purified vaporized aqueous effluents, as the evaporation takes place. The purified vaporized aqueous effluents are separated from the concentrates in the shell at the bottom of the evaporator and into a tangential entry separator 5.

A portion of the various fractions of concentrates, collected at the bottom of 4 and at 5b, is recycled, via the pump 6, into the next compartment at the top of the evaporator 4 ; the other portion 13 is extracted in order, for example, to be sent to a suitable BT and/or PCT.

The purified vaporized aqueous effluents at the outlet 5a of the separator 5 are recompressed using a fan 7. The recompressed purified vaporized aqueous effluents, sent to the outside of the tubes of the evaporator 4, are used, by condensing thereon, to vaporize the contaminated aqueous effluents. The resulting purified condensed aqueous effluents, recovered in the bottom of the tank 8, supply the exchanger 3 via the pump 9 and are used, as has been stated above, for preheating the contaminated aqueous effluents before being collected in 10, from where they may in particular be recycled, preferably as make-up water, to the polymerization step for preparing a VC polymer.

The purified vaporized aqueous effluents possibly remaining and/or the noncondensable gases exit via the top of the tank 8 and are condensed in the exchanger 11.

## Claims

1. Process for preparing a vinyl chloride polymer, comprising a step of polymerizing at least one monomer including vinyl chloride carried out in an aqueous medium, from which the unreacted monomer and the polymer obtained have then been separated, and comprising the subsequent treatment and recycling of the aqueous effluents originating from this preparation, said treatment and recycling comprising :
- a step of vaporizing at least one portion of said aqueous effluents in order to obtain purified vaporized aqueous effluents ;
- a step of condensing the purified vaporized aqueous effluents in order to obtain purified condensed aqueous effluents ; and
- a step of recycling the purified condensed aqueous effluents to one of the steps for preparing the vinyl chloride polymer
wherein the purified condensed aqueous effluents are recycled as make-up water to the polymerization step.

2. Process according to Claim 1, **characterized in that** the vaporization step and the condensation step are carried out in a device chosen from evaporators.

3. Process according to Claims 1 or 2, **characterized in that** the energy of the process is optimized by using one or other of the methods hereinbelow, taken separately or in combination :
- multi-effect evaporation;
- thermal recompression of the purified vaporized aqueous effluents;
- mechanical recompression of the purified vaporized aqueous effluents.

4. Process according to Claim 3, **characterized in that** the vaporization step and the condensation step are carried out in an evaporator with mechanical recompression of the purified vaporized aqueous effluents.

5. Process according to Claim 1, **characterized in that** it takes place at the earliest when the unreacted monomer and the polymer obtained have been separated from the aqueous medium in which the polymerization step was carried out.

6. Process according to Claim 1, **characterized in that** the vaporization step and the condensation step are carried out in a falling film evaporator.

## Patentansprüche

1. Verfahren zur Herstellung eines Vinylchloridpolymers, umfassend einen Schritt des Polymerisierens von mindestens einem Monomer, das Vinylchlorid einschließt, welcher in einem wässrigen Medium durchgeführt wird, von dem das nicht umgesetzte Monomer und das erhaltene Polymer abgetrennt worden sind, und umfassend die nachfolgende Behandlung und das Recycling der aus dieser Herstellung entspringenden wässrigen Ausflüsse, wobei die Behandlung und das Recycling umfassen :
- einen Schritt des Verdampfens von mindestens einem Teil der wässrigen Ausflüsse, um gereinigte verdampfte wässrige Ausflüsse zu erhalten;
- einen Schritt des Kondensierens der gereinigten verdampften wässrigen Ausflüsse, um gereinigte kondensierte wässrige Ausflüsse zu erhalten; und
- einen Schritt des Recycelns der gereinigten kondensierten wässrigen Ausflüsse in einen der Schritte zur Herstellung des Vinylchloridpolymers,
wobei die gereinigten kondensierten wässrigen Ausflüsse als Zusatzwasser in den Polymerisationsschritt recycelt werden.

2. Verfahren nach Anspruch 1, **dadurch gekennzeichnet, dass** der Verdampfungsschritt und der Kondensationsschritt in einer aus Verdampfern ausgewählten Vorrichtung durchgeführt werden.

3. Verfahren nach Anspruch 1 oder 2, **dadurch gekennzeichnet, dass** die Energie des Verfahrens durch Verwendung der einen oder anderen der folgenden Methoden optimiert wird, die separat oder in Kombination eingesetzt werden :
- Mehrfacheffekt-Verdampfung;
- thermische Rekompression der gereinigten verdampften wässrigen Ausflüsse;
- mechanische Rekompression der gereinigten verdampften wässrigen Ausflüsse.

4. Verfahren nach Anspruch 3, **dadurch gekennzeichnet, dass** der Verdampfungsschritt und der Kondensationsschritt in einem Verdampfer mit mechanischer Rekompression der gereinigten verdampften wässrigen Ausflüsse durchgeführt werden.

5. Verfahren nach Anspruch 1, **dadurch gekennzeichnet, dass** es frühestens stattfindet, wenn das nicht umgesetzte Monomer und erhaltene Polymer von dem wässrigen Medium abgetrennt wurden, in dem der Polymerisationsschritt durchgeführt worden war.

6. Verfahren nach Anspruch 1, **dadurch gekennzeichnet, dass** der Verdampfungsschritt und der Kondensationsschritt in einem Fallfilmverdampfer durchgeführt werden.

## Revendications

1. Procédé de préparation d'un polymère de chlorure de vinyle, comprenant une étape de polymérisation d'au moins un monomère contenant du chlorure de vinyle, réalisée dans un milieu aqueux duquel le monomère n'ayant pas réagi et le polymère obtenu ont été ensuite séparés, et comprenant le traitement et le recyclage ultérieurs des effluents aqueux issus de cette préparation, lesdits traitement et recyclage comprenant :
- une étape de vaporisation d'au moins une partie desdits effluents aqueux afin d'obtenir des effluents aqueux vaporisés purifiés ;
- une étape de condensation des effluents aqueux vaporisés purifiés afin d'obtenir des effluents aqueux condensés purifiés ; et
- une étape de recyclage des effluents aqueux condensés purifiés vers l'une des étapes de préparation du polymère de chlorure de vinyle
dans lequel les effluents aqueux condensés purifiés sont recyclés comme eau d'appoint vers l'étape de polymérisation.

2. Procédé selon la revendication 1, **caractérisé en ce que** l'étape de vaporisation et l'étape de condensation sont réalisées dans un dispositif choisi parmi des évaporateurs.

3. Procédé selon les revendications 1 ou 2, **caractérisé en ce que** l'énergie du procédé est optimisée par l'utilisation de l'une ou l'autre des méthodes ci-après, séparément ou en combinaison :
- évaporation à multiples effets ;
- recompression thermique des effluents aqueux vaporisés purifiés ;
- recompression mécanique des effluents aqueux vaporisés purifiés.

4. Procédé selon la revendication 3, **caractérisé en ce que** l'étape de vaporisation et l'étape de condensation sont réalisées dans un évaporateur avec recompression mécanique des effluents aqueux vaporisés purifiés.

5. Procédé selon la revendication 1, **caractérisé en ce qu'**il a lieu au plus tôt quand le monomère n'ayant pas réagi et le polymère obtenu ont été séparés du milieu aqueux dans lequel l'étape de polymérisation a été réalisée.

6. Procédé selon la revendication 1, **caractérisé en ce que** l'étape de vaporisation et l'étape de condensation sont réalisées dans un évaporateur à film tombant.
